# EUROPÄISCHE PATENTSCHRIFT

(11) **EP 2 996 923 B1**
(45) Veröffentlichungstag und Bekanntmachung des Hinweises auf die Patenterteilung: **26.06.2019**
(21) Anmeldenummer: 14724395.0
(22) Anmeldetag: 09.05.2014
(51) Int. Cl.: B61D 27/00, B60H 1/34, F24F 13/072

(54) **LUFTAUSLASS**
AIR OUTLET
SORTIE D'AIR

(30) Priorität: 16.05.2013 AT 503282013
(43) Veröffentlichungstag der Anmeldung: 23.03.2016
(73) Patentinhaber: Siemens AG Österreich, 1210 Wien (AT)
(72) Erfinder: KLOPSCH, Christian, A-1230 Wien (AT); IBANSCHITZ, Michael, 2443 Stotzing (AT)
(74) Vertreter: Maier, Daniel Oliver
(86) Internationale Anmeldenummer: PCT/EP2014/059526
(87) Internationale Veröffentlichungsnummer: WO 2014/184101

(56) Entgegenhaltungen:
- WO-A1-2007/110369
- DE-U1- 29 500 271
- DE-U1-202012 009 059
- GB-A- 1 508 694
- GB-A- 2 256 473
- US-A- 2 077 734
- US-A- 2 804 007

## Beschreibung

### Technisches Gebiet

Die Erfindung betrifft einen Luftauslaß für die Zuführung von Luft in Räume, insbesondere in Passagierräume von Schienenfahrzeugen.

### Stand der Technik

Die Zuführung von Frischluft, bzw. erwärmter oder gekühlter Luft in den Passgierraum eines Schienenfahrzeugs erfolgt über Luftkanäle und Luftauslässe. Dabei ist eine Strömung anzustreben, welche eine möglichst gute Durchmischung der Luft ermöglicht und somit ein homogenes Temperaturfeld im Passagierraum schafft. Für einen möglichst hohen Komfort ist zusätzlich eine Luftströmung zu schaffen, welche entlang der Decke und anschließend entlang der Fenster in Richtung des Bodens orientiert ist, um so zu vermeiden, dass die Fahrgäste einem starken Luftstrahl direkt ausgesetzt sind. Dazu sind deckenseitig Luftauslässe vorzusehen, welche die zugeführte Luft entsprechend ausströmen lassen. Sowohl die Geschwindigkeits- als auch die Temperaturverteilung in einem Passagierraum ist Gegenstand von Normungen, beispielsweise definieren die Normen DIN EN 14813 und DIN EN 14750 diese Temperaturverteilungen in Nahverkehrswagen, die Norm DIN EN 13129 für Fernverkehrswagen. Die Forderung nach guter Durchmischung der Luft für eine gleichmäßige Temperaturverteilung ist gleichzeitig mit einer niedrigen Strömungsgeschwindigkeit nur sehr schwer zu erzielen, da diese beiden Forderungen einander entgegenstehen. Weiters müssen Luftauslässe möglichst kostengünstig herstell- und montierbar sein, eine strömungsoptimierte Luftführung mit geringem Energieverlust bieten und ein möglichst geräuscharmes Ausströmen der Luft sicherstellen. Weiters soll ein Luftauslaß so gestaltet sein, dass an seiner Oberfläche keine Kondensation der feuchten Raumluft erfolgen kann, da sonst die dadurch entstehenden Wassertropfen auf die Passagiere tropfen können. Eine weitere Forderung an Luftauslässe besteht darin, dass diese während des Betriebs möglichst wenig verschmutzen. Aus dem Stand der Technik sind Luftauslässe bekannt, beispielsweise zeigt DE 20 2012 09 059 U1 einen Luftauslaß für Passagierräume in Fahrzeugen, welcher jedoch sehr aufwendig ausgeführt ist. Insbesondere erfordert der in dieser Schrift offenbarte Luftauslaß eine Vielzahl an Bauteilen.

Das Dokument GB 1 508 694 A1 beschreibt einen Luftauslaß, der als Strangpreßprofil mit einer Luftzuführungsseite und einer Luftauslaßseite ausgebildet ist, umfassend mehrere in Profillängsrichtung orientierte Luftleitelemente, welche mindestens zwei voneinander getrennte Luftauslaßöffnungen bilden, welche sich über die Länge des Luftauslaßprofils erstrecken und wobei die Luftauslaßöffnungen die austretende Luft in mindestens zwei unterschiedliche Ausblasrichtungen leiten, sowie eine in Luftströmungsrichtung den Luftleitelementen vorgelagerte, quer zur Luftströmungsrichtung angeordnete Platte.

### Darstellung der Erfindung

Der Erfindung liegt daher die Aufgabe zugrunde, einen Luftauslaß anzugeben, welcher eine gute Temperaturverteilung in einem Passagierraum sicherstellt und dabei
strömungsgünstig, kondensationsfrei, verschmutzungssicher ist und dabei wesentlich kostengünstiger hergestellt werden kann als Luftauslässe gemäß dem Stand der Technik.

Die Aufgabe wird durch einen Luftauslaß mit den Merkmalen des Anspruchs 1 gelöst. Vorteilhafte Ausgestaltungen sind Gegenstand untergeordneter Ansprüche.

Dem Grundgedanken der Erfindung nach wird ein Luftauslaß beschrieben, welcher als Strangpreßprofil ausgebildet ist und welcher eine Luftzuführungsseite und eine Luftauslaßseite und mehrere in Profillängsrichtung orientierte Luftleitelemente umfasst, welche mindestens zwei voneinander getrennte Luftauslaßöffnungen bilden, welche sich über die Länge des Luftauslaßprofils erstrecken und wobei die Luftauslaßöffnungen die austretende Luft in mindestens zwei unterschiedliche Ausblasrichtungen leiten, sowie eine in Luftströmungsrichtung den Luftleitelementen vorgelagerte, quer zur Luftströmungsrichtung angeordnete Platte, wobei die Platte Ausnehmungen aufweist, welche den Luftdurchfluß zu den Luftauslaßöffnungen abwechselnd freigibt und wobei die Luftauslaßöffnungen in Strömungsrichtung einen Strömungsquerschnitt aufweisen, welcher in einem erstem Abschnitt verengend ausgeführt ist und in einem zweiten Abschnitt erweiternd ausgeführt ist, wobei eines der die Strömung formenden Luftleitelemente in dem zweiten Abschnitt zur Bildung einer Unterdruckzone ausgebildet ist, wobei das Luftauslaßprofil gemeinsam mit den Luftleitelementen einstückig hergestellt ist.

Dadurch ist der Vorteil erzielbar, die Strömung der einem Raum zugeführten Luft so führen zu können, dass sie entlang der Decke dieses Raums strömt und somit die darin befindlichen Personen nicht direkt anströmt. Die Montage von Luftauslässen an der Decke von Räumen ist der bei weitem häufigste Montageort, da von dieser Position der gesamte Raum optimal mit Frischluft versorgt werden kann, wobei insbesondere die Blockiergefahr für den Luftstrom, beispielsweise durch Gepäckstücke oder Kleidung ausgeschaltet ist.

Erfindungsgemäß wird die Frischluft (bzw. erwärmte oder gekühlte Luft) einem Luftauslaß zugeführt. Der Luftauslaß, bzw. das Luftauslaßprofil ist mit mehreren Luftleitelementen ausgestattet, wobei jeweils zwei korrespondierende Luftleitelemente eine Luftauslaßöffnung bilden. Diese Luftauslaßöffnungen erstrecken sich über die gesamte Länge eines Luftauslaßprofils, wobei mindestens zwei Luftauslaßöffnungen vorgesehen sind. Die Ausströmrichtungen der mindestens zwei Luftauslaßöffnungen sind unterschiedlich voneinander vorgesehen. Dabei ist es besonders vorteilhaft, eine Ausströmrichtung zur einer der Längsseiten des Luftauslaßprofils zu lenken, die zweite Ausströmrichtung zu der zweiten Längsseite des Luftauslaßprofils hin zu orientieren. Die Luftleitelemente können vorteilhafterweise als Lamellen mit strömungsgünstiger Form- und Oberflächengestaltung vorgesehen werden.

Eine Platte ist Teil des Luftauslasses und ist quer zur Luftströmungsrichtung angeordnet in Luftströmungsrichtung den Luftleitelementen vorgelagert. In dieser Platte sind mehrere Ausnehmungen angeordnet durch welche die Frischluft von der Luftzuführungsseite zu der Luftauslaßseite strömen kann. Dabei erfolgt eine Strömung durch eine Ausnehmung nur in eine der Luftauslaßöffnungen. Die Ausnehmungen sind alternierend angeordnet, sodass über den Längsverlauf des Luftauslaßprofils die Luftauslaßöffnungen abwechselnd mit Frischluft versorgt werden. Aufgrund der jeweils entgegengesetzten Ausströmrichtungen der Luftauslaßöffnungen stellt sich somit eine verzahnte Strömungsstruktur ein, bei welcher die Strömungsrichtungen einander abwechseln. Solcherart erfolgt eine besonders gute Durchmischung der zugeführten Luft mit der im Raum bereits vorhandenen. Zusätzlich erfolgt eine gleichmäßige Umspülung der Oberflächen an der Luftauslassseite mit Frischluft, was das Kondensationsrisiko ebendort verringert.

Die Luftauslaßöffnungen sind so auszuführen, dass die Luftströmung möglichst ausschließlich entlang der Raumdecke erfolgt. Dazu geben die jeweiligen Luftleiteinrichtungen die Strömungsrichtung vor. Dadurch kann ein Verbleiben der Luftströmung im Deckenbereich noch nicht sichergestellt werden, da die Luftleiteinrichtungen im Allgemeinen nicht so anordenbar sind, dass eine Luftströmung entlang, bzw. parallel zur Einbauebene des Luftauslasses (typischerweise eine Raum- bzw. Passagierraumdecke) erfolgt. Dazu wären deutlich aus dem Querschnitt des Luftauslaßprofils herausragende Luftleitelemente erforderlich, welche die Luftströmung entsprechend leiten, dabei jedoch ästhetisch wenig ansprechend und beschädigungsempfindlich wären. Deshalb ist erfindungsgemäß vorgesehen, eine Umlenkung der Luftströmung mit Hilfe des Coandaeffekts zu erzielen. Dazu sind die Querschnitte der die Luftauslaßöffnungen in Strömungsrichtung mit einem zweistufigen Strömungsquerschnitt ausgestattet. In einem ersten Abschnitt ist dieser Strömungsquerschnitt verengend ausgeführt. In einem darauffolgenden zweiten Abschnitt ist der Strömungsquerschnitt erweiternd ausgeführt, wobei eines der die Strömung formenden Luftleitelemente in dem zweiten Abschnitt zur Bildung einer Unterdruckzone ausgebildet ist. Diese Unterdruckzone bewirkt durch den in ihr entstehenden Druckabfall eine Verlagerung der Strömung in Richtung dieser Unterdruckzone. Solcherart ist die Luftströmung stärker umlenkbar als es der rein geometrischen Formgebung der Luftleitelemente entspricht.

Vorteilhafterweise kann die Unterdruckzone durch ein einseitiges Aufweiten des Strömungsquerschnitts erzeugt werden, wobei jenes die Unterdruckzone auslösende Luftleitelement an der Unterdruckzone eine größere Krümmung aufweist als das zweite die Strömung formende Luftleitelement. Solcherart ist der Vorteil erzielbar, eine Unterdruckzone ohne das Aufbringen von Oberflächenstörungen (insbesondere mittels weiterer Bauteile wie z.B. Turbulatoren) erzeugen zu können.

In weiterer Fortbildung der Erfindung empfiehlt es sich, die Auslösung der Unterdruckzone mittels einer Störstelle an jenem die Unterdruckzone auslösenden Luftleitelement vorzunehmen. Dabei kann eine Kante, ein Vorsprung oder eine sonstige Ausformung vorgesehen werden, welche im Strömungsquerschnitt angeordnet ist und dabei ein Strömungsablösegebiet, d.h. eine Verwirbelungszone und somit eine Unterdruckzone auslöst. Diese Störstelle, bzw. Kante kann dabei auch für eine optisch gefällige Gestaltung des Luftauslaßprofils eingesetzt werden.

Ein weiterer Vorteil gegenständlicher Erfindung besteht darin, dass der gesamte Luftauslaß, d.h. das Luftauslaßprofil einstückig hergestellt ist. Es sind keine weiteren Bauteile, wie Diffusoren erforderlich, sodass der Montageaufwand dafür entfallen kann. Es empfiehlt sich, das Luftauslaßprofil als Strangpreßprofil auszuführen, und die erforderlichen Ausnehmungen in der Platte durch spanende Bearbeitung herzustellen.

Durch einen erfindungsgemäßen Luftauslaß gelingt es weiters, alle dem zu belüftenden Raum zugewandten Oberflächen des Luftauslaßprofils von der zugeführten Luft umströmt zu halten, wodurch die Kondensationsgefahr feuchter, warmer Raumluft an dem Luftauslaßprofil verhindert wird. Dadurch entfällt die Gefahr der Wassertropfenbildung und eine Schmutzablagerung an dem Luftauslaßprofil wird effizient verhindert.

Die Zuführung von Frischluft in den Luftauslaß erfolgt über die Luftzuführungsseite des Luftauslasses, welche der Luftauslaßseite gegenüberliegend angeordnet ist. In typischen Einsatzumgebungen erfolgt diese Luftzuführung mittels Luftkanälen welche im Wesentlichen parallel zu dem Luftauslaßprofil ausgerichtet sind. Solcherart kann die aus dem Luftauslaß austretende Luft eine Geschwindigkeitskomponente in Längsrichtung aufweisen, was zu Störungen der Strömungsverteilung führt. Zur Verhinderung dieses Effekts kann dem Luftauslaß auf der Luftzuführungsseite ein Mehrzahl an Querstegen angeordnet werden, welche für einen Lufteintritt in das Luftauslaßprofil normal zur Längsrichtung sorgen, die unerwünschte Längskomponente der Strömungsgeschwindigkeit somit aufheben. Es ist empfehlenswert, diese Querstege (Strömungsgleichrichter) als getrenntes Bauteil vorzusehen, da sie nicht als Teil eines Strangpreßprofils herstellbar sind und damit einen wesentlichen Vorteil des erfindungsgemäßen Luftauslasses, die einfache und kostengünstige Herstellung nicht zulassen.
Wird ein erfindungsgemäßer Luftauslaß jedoch mittels eines anderen Verfahrens hergestellt, z.B. mittels Spritzguss, so können sowohl das Luftauslaßprofil, die Ausnehmungen in der Platte und die Querstege einstückig hergestellt werden.

Ein erfindungsgemäßer Luftauslaß ist für die Belüftung jeglicher Räume geeignet, wobei insbesondere der Einsatz in Passagierräumen von Schienenfahrzeugen vorteilhaft ist. Es ist weiters vorteilhaft, das Luftauslaßprofil mit Befestigungseinrichtungen auszustatten, welche den Einbau in Deckenaufbauten ermöglichen. Beispielsweise kann das Luftauslaßprofil mit sogenannten C-Nuten zur Aufnahme von Nutensteinen ausgestattet werden.

### Kurzbeschreibung der Zeichnungen

Es zeigen beispielhaft:
**Fig.1** Einen Luftauslaß, Schrägansicht.
**Fig.2** Einen Luftauslaß, Aufsicht.
**Fig.3** Einen Luftauslaß, Schnitt 1.
**Fig.4** Einen Luftauslaß, Schnitt 2.
**Fig.5** Eine Luftauslaßöffnung, Schnitt.
**Fig.6****.** Eine Strömungssimulation eines Luftauslasses.
**Fig.7****.** Eine Strömungssimulation eines Luftauslasses, Detail.
**Fig.8****.** Eine Druckauswertung einer Strömungssimulation eines Luftauslasses.
**Fig.9** Einen Luftauslaß mit einem Querprofil.

### Ausführung der Erfindung

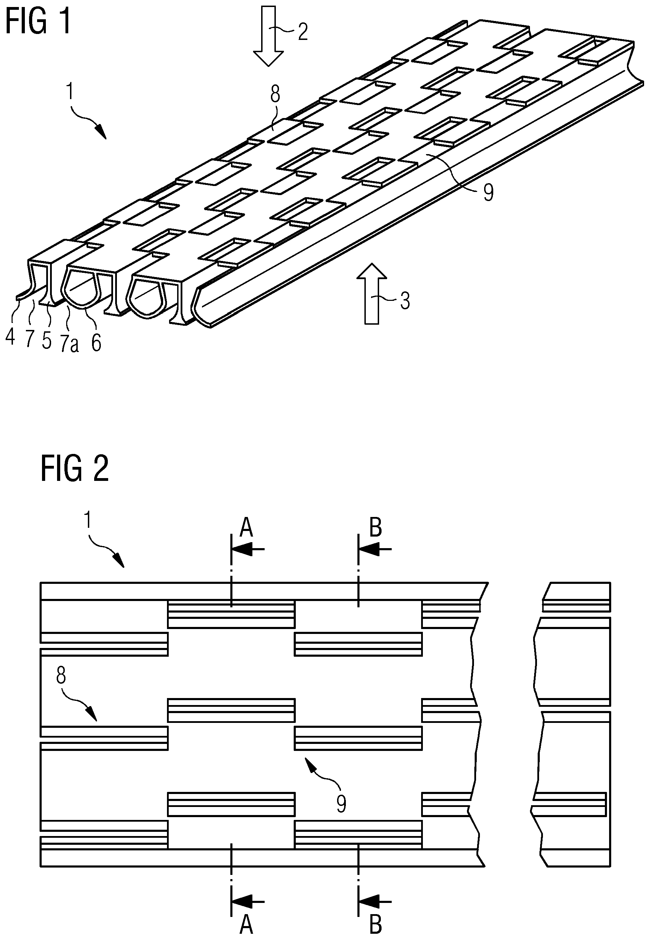

**Fig.1** zeigt beispielhaft und schematisch einen Luftauslaß 1 in einer Schrägansicht. Ein Luftauslaß 1 in Form eines Profils umfasst eine Platte 8 und eine Mehrzahl an Luftleitelementen 4, 5, 6. Die Luftleitelemente 4, 5, 6 sind fest mit der Platte 8 verbunden, bzw. in einem gemeinsamen Fertigungsschritt (Strangpressen) mit der Platte 8 hergestellt. Der Luftauslaß 1 weist eine Luftauslaßseite 3 auf aus welcher die Luft in den zu belüftenden Raum ausbläst.

Diese Luftauslaßseite ist als Sichtfläche gestaltet, sodass bezüglich Oberflächenqualität, Farbgebung etc. entsprechende Vorkehrungen getroffen werden können. Der Luftauslaßseite 3 gegenüberliegend ist die Luftzuführungsseite 2 des Luftauslasses 1 angeordnet, über welche dem Luftauslaß 1 die Zuluft zugeführt wird. Die dafür erforderlichen Mittel, wie Luftkanäle, Absichtungen, Befestigungsmittel, etc. sind in Fig.1 nicht dargestellt. Die Platte 8 ist quer zur Luftströmungsrichtung, angeordnet. Die Luftleitelemente 4, 5, 6 bilden jeweils zwischen ihnen die Luftauslaßöffnungen 7, 7a. In gezeigtem Ausführungsbeispiel ist eine, die Luft nach links lenkende Luftauslaßöffnung 7 und eine nach rechts lenkende Luftauslaßöffnung 7a gezeigt. Dabei ist die nach links lenkende Luftauslaßöffnung 7 von den Luftleitelementen 4 und 5 gebildet und die nach rechts lenkende Luftauslaßöffnung 7a von den Luftleitelementen 5 und 6 gebildet. Das in Fig. 1 gezeigte Ausführungsbeispiel eines Luftauslasses 1 ist mit sechs Luftauslaßöffnungen ausgestattet, welche mittels weiterer Luftleitelemente (ohne Bezugszeichen) die Luft gerichtet ausblasen. Die Platte 8 ist mit Ausnehmungen 9 ausgestattet, welche den Luftdurchfluß zu den Luftauslaßöffnungen 7, 7a abwechselnd freigeben. Solcherart wird eine verzahnte Luftströmung erzielt, wobei in Längsrichtung des Luftauslasses 1 gesehen alternierend eine Ausströmung nach links und eine Ausströmung nach rechts erfolgt. Dadurch werden die Oberflächen an der Luftauslassseite gleichmäßig mit Frischluft umspült und somit das Kondensationsrisiko ebendort verringert.

**Fig.2** zeigt beispielhaft und schematisch einen Luftauslaß in einer Aufsicht. Es ist eine Aufsicht auf die Lufteinlaßseite 2 des Luftauslasses 1 aus Fig.1 dargestellt. Die Ausnehmungen 9 in der Platte 8 sind so angeordnet, dass in einem Längsabschnitt des Luftauslasses 1 alle Ausnehmungen 9 die Luftströmung zu allen Luftauslässen einer Ausblasrichtung freigeben und in einem darauffolgenden Längsabschnitt die Luftströmung zu allen Luftauslässen der weiteren Ausblasrichtung freigeben.

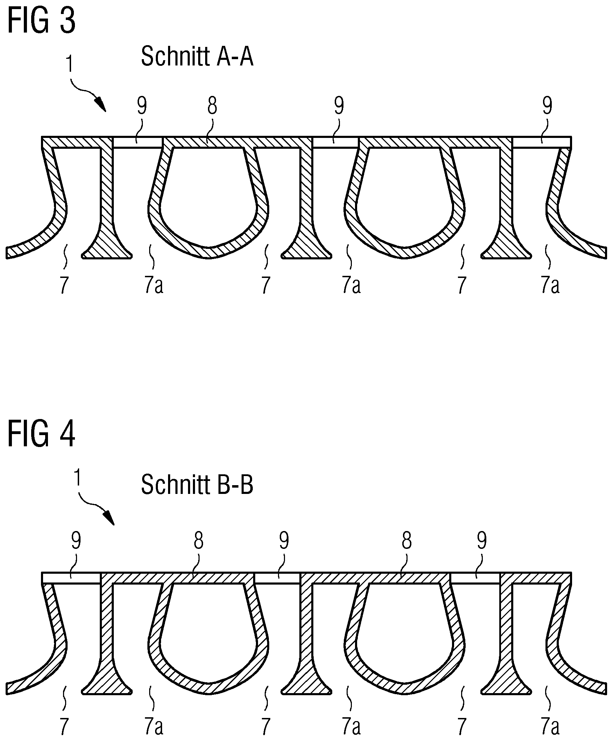

**Fig.3** zeigt beispielhaft und schematisch einen Schnitt durch den Luftauslaß 1 aus Fig.2 entlang der Schnittlinie A-A. Die Luftauslaßöffnungen 7 sind in dem gezeigten Längsabschnitt des Luftauslasses 1 durch die Platte 8 verschlossen, die Luftauslaßöffnungen 7a werden durch die Ausnehmungen 9 mit zuströmender Luft versorgt, sodass der Luftauslaß 1 in dem gezeigten Längsabschnitt die Luft rechtsseitig des Profils ausbläst.

**Fig.4** zeigt beispielhaft und schematisch einen Schnitt durch den Luftauslaß 1 aus Fig.2 entlang der Schnittlinie B-B. In gezeigtem Längsabschnitt des Luftauslasses 1 sind die Luftauslassöffnungen 7a durch die Platte 8 verschlossen und die Luftauslassöffnungen 7 werden durch die Ausnehmungen 9 mit zuströmender Luft versorgt, sodass der Luftauslaß 1 in dem gezeigten Längsabschnitt die Luft linksseitig des Profils ausbläst.

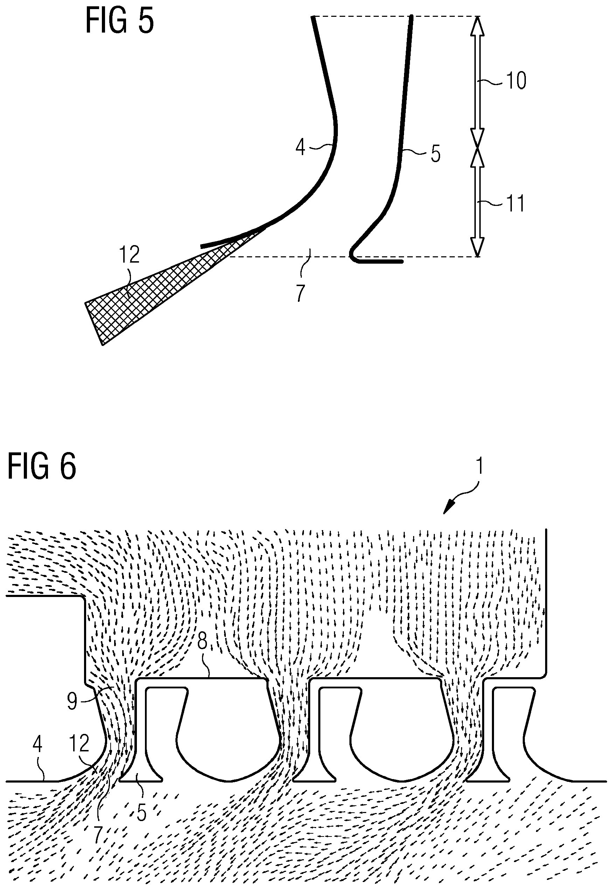

**Fig.5** zeigt beispielhaft und schematisch einen Schnitt durch eine Luftauslaßöffnung. Es ist ein Schnitt quer zur Längsachse eines Luftauslasses 1 dargestellt, wobei die Luftleiteelemente 4 und 5 eine Luftauslaßöffnung 7 bilden, weitere Teile des Luftauslasses 1 sind zur Vereinfachung der Darstellung nicht gezeigt. Im Verlauf der Strömungsrichtung, welche von oben nach unten erfolgt, durchläuft die Luft einen ersten Abschnitt 10 der Luftauslaßöffnung 7, welcher verengend ausgeführt ist. In diesem ersten Abschnitt 10 erfolgt eine Beschleunigung der Luftströmung, welche eine Maximalgeschwindigkeit an der Engstelle des Übergangs von dem ersten Abschnitt 10 in den zweiten Abschnitt 11 aufweist. Der zweite Abschnitt ist mit erweiterndem Querschnitt ausgeführt und lenkt die ausgeblasene Luft in eine vorgegebene Richtung. In Fig.5 ist beispielhaft eine Luftauslaßöffnung 7 zur linksseitigen Lenkung gezeigt. Neben der Lenkung durch die geometrische Formgebung der Luftleitelemente 4, 5 erfolgt eine zusätzliche Ablenkung der Luftströmung mittels einer Unterdruckzone 12. Diese Unterdruckzone 12 ist durch die Formgebung des Luftleitelements 4 induziert, welches am Einleitpunkt der Unterdruckzone 12 eine wesentlich größere Krümmung aufweist als das gegenüberliegende zweite Luftleitelement 5. An diesem Einleitpunkt erfolgt eine Ablösung der Luftströmung von dem Luftleitelement 4 und solcherart ein Druckabfall, welcher im Wesentlichen die Gesamte aus der Luftauslaßöffnung 7 strömende Luft stärker ablenkt. Dadurch gelingt es in konkreten Ausführungsformen des Luftauslasses die Luftströmung im Deckenbereich eines Passagierraums zu halten.

**Fig.6** Zeigt beispielhaft und schematisch eine Strömungssimulation eines Luftauslasses. Es ist ein Schnitt quer zur Längsachse durch einen Luftauslaß 1 dargestellt, wobei die Schnittlinie wie in Fig.4 angeordnet ist. Dem Luftauslaß 1 ist in Strömungsrichtung ein Sammelkanal, bzw. Querprofil vorgelagert, welches die Längskomponente der zugeführten Frischluft aufhebt. An gezeigter Stelle umfasst der Luftauslaß 1 drei nach links gerichtete Luftauslaßöffnungen 7, welche jeweils von Luftleitelementen 4, 5 gebildet sind. Die Platte 8 weist Ausnehmungen 9 auf, durch welche Zuluft in die Luftauslaßöffnungen 7 strömen kann. Die Darstellung der strömenden Luft erfolgt in Fig.6 mittels einer pfeilförmigen Strömungsdarstellung wobei die Länge der einzelnen Pfeile der Strömungsgeschwindigkeit an ebendiesem Ort entspricht. Es bildet sich eine Unterdruckzone 12. Diese Unterdruckzone 12 bewirkt eine stärkere Ablenkung des austretenden Zuluft als es durch die geometrische Formgebung der Luftleitelemente 4, 5 möglich ist.

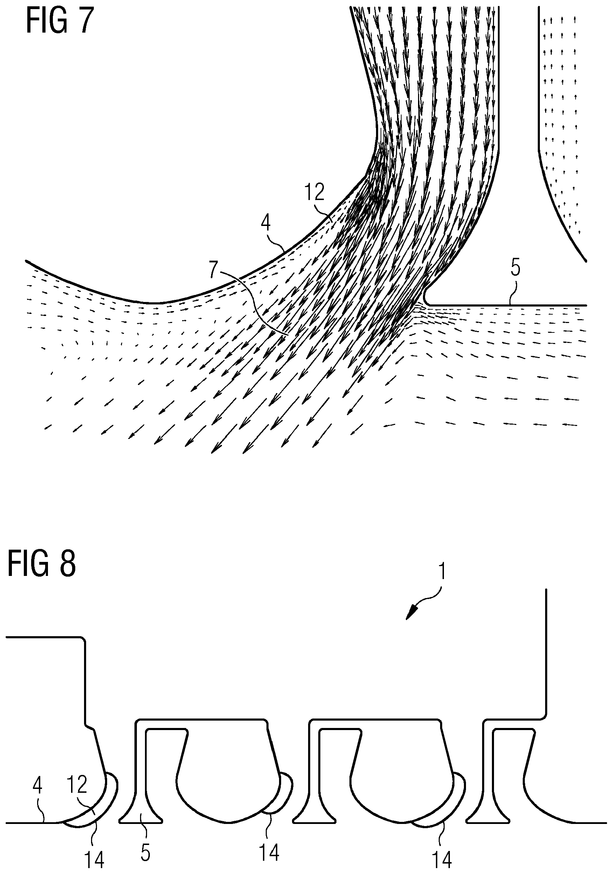

**Fig.7** Zeigt beispielhaft und schematisch ein Detail einer Strömungssimulation eines Luftauslasses. Es ist ein Ausschnitt der Simulation aus Fig.6 im Bereich einer Luftauslaßöffnung 7 dargestellt. Dabei ist die Unterdruckzone 12 deutlicher erkennbar, welche sich in Strömungsrichtung der Luft an dem Luftleitelement 4 bildet. Diese Unterdruckzone 12 bewirkt eine Umkehrung der Strömungsrichtung entlang der Oberfläche des Luftleitelements 4 sowie eine Ablenkung des aus der Luftauslaßöffnung 7 strömenden Luftstroms, welcher solcherart stärker angelenkt wird als durch die rein geometrische Formgebung der Luftleitelemente 4, 5. Diese Wirkungsweise ist in der Übersichtsdarstellung in Fig.6 besser zu sehen als in der Detaildarstellung in Fig.7. Die entgegen der Hauptströmungsrichtung der Unterdruckzone 12 zuströmende Luft ist aufgrund der Wirbelbildung an dieser Stelle ein Anteil der zugeführten Frischluft und nur zu einem sehr kleinen Teil die bestehende Altluft in dem zu belüftenden Raum.
Da der Hauptanteil der Luftströmung durch den Unterdruck eng an der Decke geführt ist, schirmt diese die in die Unterdruckzone strömende Luft von der Altluft im Passagierraum ab.
Bei klimatisierten Fahrzeugen erfolgt somit keine Kondensation des in der feuchten Luft enthaltenen Wassers an den Luftleitelementen 4, 5, da diese immer mit (gekühlter) Frischluft umspült sind.

**Fig.8** zeigt beispielhaft und schematisch den Druckverlauf gemäß einer Druckauswertung einer Strömungssimulation eines Luftauslasses. Es ist das Ausführungsbeispiel aus den Fig. 6 und 7 gezeigt, wobei anstelle der Geschwindigkeitsvektoren eine Isobare 14 des statischen Drucks dargestellt ist. Es ist eine Isobare 14 gezeigt, die die Unterdruckzone 12 in der Luftauslaßöffnung 7 begrenzt. Dabei ist zwischen dem Luftleitelement 4 und der Isobaren 14 ein niedrigerer Druck als rechtsseitig der Isobaren 14, also zwischen der Isobaren 14 und dem Luftleitelement 5. In gezeigtem Ausführungsbeispiel sind die Formen und Lagen der Isobaren 14 in jeder der drei Luftauslaßöffnungen 7 leicht unterschiedlich, da sich aufgrund der leicht unterschiedlichen Geometrie und den Zuströmbedingungen aus dem Luftsammler eben leicht unterschiedliche Strömungsverhältnisse ausbilden. Die in Fig.8 gezeigte Drucksimulation beruht auf den für Schienenfahrzeuge typischen Geometrien und Strömungsgeschwindigkeiten. Dabei entspricht die Isobare 14 einem Druck von -4 Pascal gegenüber dem Innenraumdruck.

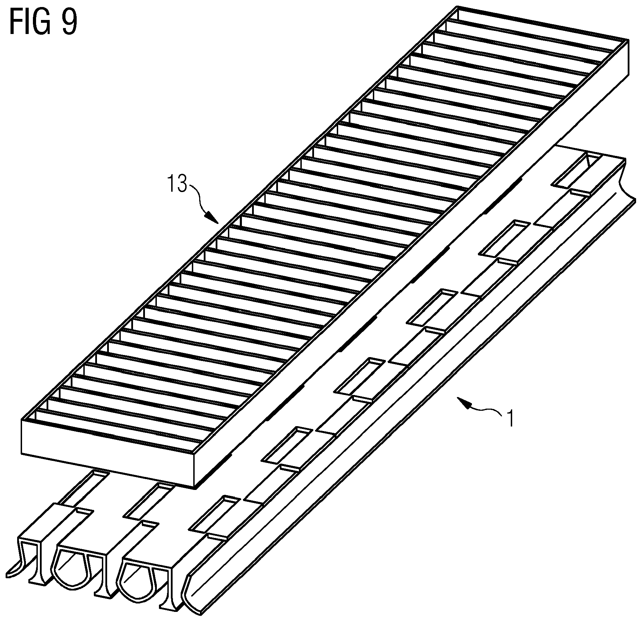

**Fig.9** zeigt beispielhaft und schematisch einen Luftauslaß mit einem Querprofil. Es ist der Luftauslaß 1 aus Fig.1 dargestellt, welcher mit einem Querprofil 13 ausgestattet ist. In gezeigtem Beispiel ist zur besseren Verständlichkeit das Querprofil 13 beabstandet von dem Luftauslaß 1 gezeigt, es kann aber auch direkt Luftdicht auf den Luftauslaß aufgebracht sein. Wichtig ist dabei, dass die Luft durch das Querprofil in der Form umgelenkt wird, um anschließend senkrecht auf die Luftzuführseite des Luftauslasses zu strömen. Das Querprofil 13 wirkt als Strömungsgleichrichter, wobei es die Längsgeschwindigkeitskomponente der zugeführten Luft eliminiert. Da in gebräuchlichen Anwendungsfällen die Zuleitung der Zuluft über einen Luftkanal erfolgt, welcher in Längsrichtung des Luftauslasses 1 orientiert ist, besitzt diese Zuluft eine Strömungskomponente in Längsrichtung des Luftauslasses 1 und würde demnach auch mit einer Längsgeschwindigkeitskomponente die Luftauslaßseite 3 des Luftauslasses 1 verlassen. Das Querprofil 13 reduziert diese Längsgeschwindigkeitskomponente, sodass sich die strömungslenkende Wirkung des Luftauslasses 1 ungestört entfalten kann. Dazu weist das Querprofil 13 eine Mehrzahl an Querstegen auf, welche für einen Lufteintritt in das Luftauslaßprofil normal zur Längsrichtung sorgen und die unerwünschte Längskomponente der Strömungsgeschwindigkeit somit aufheben.

### Liste der Bezeichnungen

- 1: Luftauslaß
- 2: Luftzuführungsseite
- 3: Luftauslaßseite
- 4: Luftleitelement A
- 5: Luftleitelement B
- 6: Luftleitelement C
- 7: Luftauslaßöffnung links
- 7a: Luftauslaßöffnung rechts
- 8: Platte
- 9: Ausnehmung
- 10: Erster Abschnitt
- 11: Zweiter Abschnitt
- 12: Unterdruckzone
- 13: Querprofil
- 14: Isobare des statischen Drucks

## Patentansprüche

1. Luftauslaß (1), als Strangpreßprofil ausgebildet mit einer Luftzuführungsseite (2) und einer Luftauslaßseite (3), umfassend mehrere in Profillängsrichtung orientierte Luftleitelemente (4, 5, 6), welche mindestens zwei voneinander getrennte Luftauslaßöffnungen (7) bilden, welche sich über die Länge des Luftauslaßprofils erstrecken und wobei die Luftauslaßöffnungen (7) die austretende Luft in mindestens zwei unterschiedliche Ausblasrichtungen leiten, sowie eine in Luftströmungsrichtung den Luftleitelementen (4, 5, 6) vorgelagerte, quer zur Luftströmungsrichtung angeordnete Platte (8),
**dadurch gekennzeichnet, dass**
die Platte (8) Ausnehmungen (9) aufweist, welche den Luftdurchfluß zu den Luftauslaßöffnungen (7) abwechselnd freigibt und wobei
die Luftauslaßöffnungen (7) in Strömungsrichtung einen Strömungsquerschnitt aufweisen, welcher in einem erstem Abschnitt (10) verengend ausgeführt ist und in einem zweiten Abschnitt (11) erweiternd ausgeführt ist, wobei eines der die Strömung formenden Luftleitelemente in dem zweiten Abschnitt (11) zur Bildung einer Unterdruckzone (12) ausgebildet ist, wobei das Luftauslaßprofil gemeinsam mit den Luftleitelementen (4, 5, 6) einstückig hergestellt ist.

2. Luftauslaß (1) nach Anspruch 1, **dadurch gekennzeichnet, dass** die Ausblasrichtungen normal zur Profillängsrichtung orientiert sind.

3. Luftauslaß (1) nach Anspruch 2, **dadurch gekennzeichnet, dass** die Ausblasrichtungen beidseitig des Luftauslaßprofils orientiert sind.

4. Luftauslaß (1) nach einem der Ansprüche 1 bis 3,
**dadurch gekennzeichnet, dass** die Bildung der Unterdruckzonen (12) in den zweiten Abschnitten (11) der die Strömung formenden Luftleitelemente (4, 5, 6) durch das einseitige Aufweiten des Strömungsquerschnitts erfolgt.

5. Luftauslaß (1) nach Anspruche 4, **dadurch gekennzeichnet, dass** jenes die Unterdruckzone auslösende Luftleitelement an der Unterdruckzone eine größere Krümmung aufweist als das zweite die Strömung formende Luftleitelement.

6. Luftauslaß (1) nach Anspruche 4, **dadurch gekennzeichnet, dass** jenes die Unterdruckzone (12) auslösende Luftleitelement an der Unterdruckzone (12) eine Störstelle, insbesondere eine Kante aufweist.

7. Luftauslaß (1) nach einem der Ansprüche 1 bis 6,
**dadurch gekennzeichnet, dass** das der Luftauslaß (1) zur Montage an einer Deckenkonstruktion eines Passagierraums eines Fahrzeugs ausgebildet ist.

8. Luftauslaß (1) nach einem der Ansprüche 1 bis 7,
**dadurch gekennzeichnet, dass** das Luftauslaßprofil aus einer Aluminiumlegierung hergestellt ist

## Claims

1. Air outlet (1), designed as an extruded profiled element with an air feed side (2) and an air outlet side (3), comprising a plurality of air-conducting elements (4, 5, 6) which are oriented in a profiled-element longitudinal direction, which form at least two air outlet openings (7), which are separated from one another and which extend over the length of the air outlet profiled element, and wherein the air outlet openings (7) conduct the exiting air in at least two different blow-out directions, and a plate (8) which is arranged upstream of the air-conducting elements (4, 5, 6) in an air outflow direction and which is perpendicular to the air flow direction,
**characterised in that**
the plate (8) has openings (9), which allow air to flow through to the air outlet openings (7) in alternation, and wherein
the air outlet openings(7) have a flow cross-section in the flow direction, that narrows in a first segment (10) and widens in a second segment (11), wherein one of the air-conducting elements forming the flow is designed in the second segment (11) to form a vacuum zone (12), wherein the air outlet profiled element is manufactured in one piece together with the air-conducting elements (4, 5, 6).

2. Air outlet (1) according to claim 1, **characterised in that** the blow-out directions are oriented perpendicular to the profiled-element longitudinal direction.

3. Air outlet (1) according to claim 2, **characterised in that** the blow-out directions are oriented on both sides of the air outlet profiled element.

4. Air outlet (1) according to one of claims 1 to 3,
**characterised in that** vacuum zones (12) are created in the second segments (11) of the air-conducting elements (4, 5, 6) forming the flow by the widening of the flow cross-section on one side.

5. Air outlet (1) according to claim 4, **characterised in that** each air conducting element producing the vacuum zone has a larger curve in the vacuum zone than the second air conducting element forming the flow.

6. Air outlet (1) according to claim 4, **characterised in that** each air conducting element producing the vacuum zone (12) has a discontinuity in the vacuum zone (12), particularly a ridge.

7. Air outlet (1) according to one of claims 1 to 6,
**characterised in that** the air outlet (1) is designed for installation in a ceiling construction of a passenger compartment of a vehicle.

8. Air outlet (1) according to one of claims 1 to 7,
**characterised in that** the air outlet profiled element is manufactured from an aluminium alloy.

## Revendications

1. Sortie d'air (1) réalisée en tant que profilé extrudé avec une face d'alimentation en air (2) et une face de sortie d'air (3), comprenant plusieurs éléments de direction d'air (4, 5, 6) orientés dans la direction longitudinale de profilé, qui forment au moins deux ouvertures de sortie d'air (7) séparées l'une de l'autre, qui s'étendent sur la longueur du profilé de sortie d'air et dans lequel les ouvertures de sortie d'air (7) dirigent l'air sortant dans au moins deux directions de soufflage d'air différentes, ainsi qu'une plaque (8) montée en amont des éléments de direction d'air (4, 5, 6) dans la direction de flux d'air, disposée transversalement à la direction de flux d'air, **caractérisée en ce que** la plaque (8) présente des évidements (9) qui libèrent le débit d'air en alternance vers les ouvertures de sortie d'air (7) et dans laquelle les ouvertures de sortie d'air (7) présentent une section transversale de flux dans la direction de flux, laquelle section transversale de flux est réalisée de manière resserrée dans une première section (10) et est réalisée de manière élargie dans une seconde section (11), dans laquelle l'un des éléments de direction d'air formant le flux dans la seconde section (11) est réalisé pour la formation d'une zone de dépression (12), dans laquelle le profilé de sortie d'air est fabriqué d'un seul tenant conjointement avec les éléments de direction d'air (4, 5, 6).

2. Sortie d'air (1) selon la revendication 1, **caractérisée en ce que** les directions de soufflage sont orientées perpendiculairement à la direction longitudinale de profilé.

3. Sortie d'air (1) selon la revendication 2, **caractérisée en ce que** les directions de soufflage sont orientées des deux côtés du profilé de sortie d'air.

4. Sortie d'air (1) selon l'une des revendications 1 à 3, **caractérisée en ce que** la formation des zones de dépression (12) s'opère dans les secondes sections (11) des éléments de direction d'air (4, 5, 6) formant le flux par le biais de l'élargissement unilatéral de la section transversale de flux.

5. Sortie d'air (1) selon la revendication 4, **caractérisée en ce que** chaque élément de direction d'air occasionnant la zone de dépression présente une courbure plus grande au niveau de la zone de dépression que le second élément de direction d'air formant le flux.

6. Sortie d'air (1) selon la revendication 4, **caractérisée en ce que** chaque élément de direction d'air occasionnant la zone de dépression (12) présente un point de perturbation au niveau de la zone de dépression (12), en particulier un rebord.

7. Sortie d'air (1) selon l'une des revendications 1 à 6, **caractérisée en ce que** la sortie d'air (1) est réalisée pour un montage au niveau d'une construction de plafond d'un espace passagers d'un véhicule.

8. Sortie d'air (1) selon l'une des revendications 1 à 7, **caractérisée en ce que** le profilé de sortie d'air est fabriqué à partir d'un alliage d'aluminium.
